# EUROPÄISCHE PATENTSCHRIFT

(11) **EP 1 659 106 B1**
(45) Veröffentlichungstag und Bekanntmachung des Hinweises auf die Patenterteilung: **27.01.2010**
(21) Anmeldenummer: 05024971.3
(22) Anmeldetag: 15.11.2005
(51) Int. Cl.: C04B 41/87, C04B 41/89, B01J 35/00, B01J 35/10

(54) **Keramischer Formkörper mit photokatalytisch-aktiver Beschichtung und Verfahren zur Herstellung desselben**
Ceramic article having photocatalytically active coating and method for producing the same
Pièce céramique à revêtement photocatalytique et son procédé de fabrication

(30) Priorität: 17.11.2004 DE 102004055509; 23.12.2004 DE 102004063428
(43) Veröffentlichungstag der Anmeldung: 24.05.2006
(73) Patentinhaber: ERLUS AKTIENGESELLSCHAFT, 84088 Neufahrn (DE)
(72) Erfinder: Thierauf, Axel, Dr., 84066 Mallersdorf-Paffenberg (DE); Stoll, Alexander, Dr., 85354 Freising (DE); Ackerhans, Carsten, Dr., 84061 Ergoldsbach (DE); Gast, Eduard, Dr., 84559 Kraiburg (DE)
(74) Vertreter: LOUIS, PÖHLAU, LOHRENTZ

(56) Entgegenhaltungen:
- EP-A1- 1 118 385
- DE-A1- 10 324 519
- DE-A1- 10 326 570
- FR-A1- 2 816 610
- JP-A- 2000 070 726
- US-A1- 2003 190 431

## Beschreibung

Die Erfindung betrifft einen keramischen, vorzugsweise grobkeramischen, Formkörper mit photokatalytisch-aktiver Beschichtung sowie ein Verfahren zur Herstellung desselben.

In der EP 1 118 385 A1 wird eine Methode und eine Vorrichtung zur Herstellung eines funktionellen Materials mit photokatalytischer Aktivität beschrieben.

Die FR 2 816 610 betrifft eine Dispersion, Welche photokatalytisch-aktive Titandioxidpartikel und ein anionisches, wasserlösliches Dispersionsmittel und ein ampholytisches, wasserlösliches, filmbildendes Polymer umfasst.

Die JP 2000-070726 A beschreibt eine photokatalytische Beschichtung bestehend aus TiO₂, ZnO und einem organischen Harz.

Aus der WO 03/101912 ist ein keramischer Formkörper, nämlich ein Dachziegel, Ziegel, Klinker oder eine Fassadenwand aus oxidkeramischem Basismaterial bekannt, der bei Beregnung oder Berieselung mit Wasser eine selbstreinigende Oberfläche aufweist, wobei der Formkörper eine poröse oxidkeramische Beschichtung aufweist und die Beschichtung photokatalytisch-aktiv ist und eine spezifische Oberfläche in einem Bereich von etwa 20 m²/g bis etwa 200 m²/g aufweist. Des weiteren offenbart die WO 03/101912 ein Verfahren zur Herstellung eines solchen grobkeramischen Formkörpers.

Obgleich das aus der WO 03/101912 bekannte Verfahren zur Herstellung von keramischen Formkörpern mit photokatalytisch-aktiver Beschichtung gut geeignet ist, hat sich herausgestellt, dass sich in der aufzubringenden Beschichtungssuspension Partikelagglomerate bilden können. Diese Partikelagglomerate können zu einer ungleichmäßigen Beschichtung auf dem keramischen Formkörper führen. Ferner können je nach Beschaffenheit der keramischen Formkörper auch Probleme bei der Haftung und der mechanischen Stabilität der photokatalytischen Schicht auftreten.

Darüber hinaus werden hydrophile, photokatalytisch-aktive Titandioxid-Beschichtungen häufig zusätzlich mit einer hydrophoben Schicht versehen. Hierdurch wird erreicht, dass das bei Beregnung auftreffende Wasser die Oberfläche nicht benetzt, sondern in Tropfenform abrollt und dabei auf der Oberfläche befindliche Schmutzteilchen, die durch Photokatalyse zersetzt wurden, mitnimmt. Derartige Beschichtungen weisen aber den Nachteil auf, dass die hydrophobe Schicht durch die photokatalytischen Eigenschaften der photokatalytischen Schicht im Laufe der Zeit zersetzt wird.

Aufgabe der Erfindung ist es, ein verbessertes Verfahren zur Herstellung eines keramischen, vorzugsweise grobkeramischen, Formkörpers, insbesondere von Dachziegeln, Ziegeln, Klinkern oder Fassadenelementen, mit photokatalytisch-aktiver Beschichtung mit verbesserter mechanischer Stabilität und Hafteigenschaften sowie einem verbesserten äußeren Erscheinungsbild bereitzustellen.

Eine weitere Aufgabe ist es, einen keramischen, vorzugsweise grobkeramischen, Formkörper mit einer über die gesamte Fläche gleichmäßigen, photokatalytisch-aktiven Beschichtung mit verbesserter mechanischer Stabilität und Hafteigenschaften bereitzustellen.

Die der Erfindung zugrundeliegende Aufgabe wird durch ein Verfahren zur Herstellung eines keramischen, vorzugsweise grobkeramischen, Formkörpers mit photokatalytisch-aktiver Beschichtung gelöst, welches die folgenden Schritte umfasst
(a) Einbringen von Kieselsol in eine Flüssigphase,
(b) Einbringen von photokatalytisch-aktiven Partikeln in die gemäß Schritt (a) bereitgestellte Phase,
(c) Aufbringen der in Schritt (b) bereitgestellten Dispersion auf einen keramischen Formkörper unter Bereitstellung eines beschichteten Formkörpers,
(d) Trocknen und/oder Härten des in Schritt (c) beschichteten Formkörpers,
   oder die folgenden Schritte umfaßt:
(e) Einbringen von photokatalytisch-aktiven Partikeln in eine Flüssigphase,
(f) Einbringen von Kieselsol in die gemäß Schritt (e) bereitgestellte Phase,
(g) Aufbringen der in Schritt (f) bereitgestellten Dispersion auf einen keramischen Formkörper unter Bereitstellung eines beschichteten Formkörpers,
(h) Trocknen und/oder Härten des in Schritt (g) beschichteten Formkörpers, wobei die photokatalytisch-aktiven Partikel TiO₂-Partikel und ZnO-Partikel umfassen, wobei in Schritt (a) vor oder nach dem Einbringen des Kieselsols anorganische Partikel in die Flüssigphase unter Bereitstellung einer nicht-newtonschen kolloidalen Dispersion eingebracht werden oder
   das in Schritt (e) vor dem Einbringen der photokatalytisch-aktiven Partikel anorganische Partikel in die Flüssigphase unter Bereitstellung einer nicht-newtonschen kolloidalen Dispersion eingebracht werden, wobei die nicht-newtonsche kolloidale Dispersion eine SiO₂/Al₂O₃-Gerüststruktur enthält, welche ein Oxidgemisch aus 80 bis 90 Gew.-% SiO₂, und 10 bis 20 Gew.-% Al₂O₃, bezogen auf das Gesamtgewicht des Oxidgemisches, umfasst.

Das Einbringen der in Schritt (a) genannten Komponenten kann grundsätzlich gemeinsam in einem Schritt gleichzeitig oder in nacheinander folgenden Teilschritten durchgeführt werden. Das gleiche gilt für die in Schritt (f) genannten Komponenten. Alternativ kann auch vorgesehen sein, dass eine oder mehrere der in Schritt (a) oder (f) genannten Komponenten separat vor oder nach einem der anderen Schritte zugegeben werden, insbesondere nach Schritt (b) oder vor Schritt (e). Zusätzlich oder alternativ kann vorgesehen sein, dass eine oder mehrere der in Schritt (a) oder (f) genannten Komponenten zusätzlich, d.h. wiederholt eingebracht werden. Wiederholt heißt, dass eine oder mehrere der Komponenten sowohl in Schritt (a) oder (f) als auch vor oder nach einem der Schritte im Verfahren zusätzlich eingebracht werden.

Bevorzugte Weiterbildungen des Verfahrens zur Herstellung eines keramischen, vorzugsweise grobkeramischen, Formkörpers sind in Unteranspruch 2 angegeben.

Des weiteren wird die der Erfindung zugrunde liegende Aufgabe durch einen keramischen Formkörper gemäß Anspruch 3 gelöst. Vorzugsweise handelt es sich bei dem keramischen Formkörper um einen grobkeramischen Formkörper, vorzugsweise ein Dachziegel, ein Ziegel, ein Klinker oder ein Fassadenelement, wobei die photokatalytisch-aktive Beschichtung eine gleichmäßige Beschichtung ist, die photokatalytisch-aktive Partikel enthält, wobei die photokatalytisch-aktiven Partikel in der Beschichtung im wesentlichen nicht agglomeriert und gleichmäßig verteilt vorliegen und die photokatalytisch-aktive Beschichtung eine hohe Haftfestigkeit, insbesondere auf dem grobkeramischen Formkörper, aufweist. Vorzugsweise sind die photokatalytisch aktiven Teilchen in der Beschichtung nicht agglomeriert.

Bevorzugte Weiterbildungen des keramischen Formkörpers sind in den Unteransprüchen 4 bis 11 angegeben.

Des weiteren wird die der Erfindung zugrunde liegende Aufgabe durch eine Verwendung des keramischen Formkörpers gemäß Anspruch 12 gelöst.

Im Folgenden wird der keramische Formkörper auch als Keramik und der grobkeramische Formkörper auch als Grobkeramik bezeichnet. Die Grobkeramik ist vorzugsweise aus der Gruppe, bestehend aus Dachziegeln, Ziegeln, Klinkern und Fassadenelementen ausgewählt.

Erfindungsgemäß umfasst das photokatalytisch-aktive Material in der Beschichtung TiO₂-Partikel und ZnO-Partikel und ggf. Zinksilikatverbindungen, Zinktitanatverbindungen, beispielsweise Zn₂SiO₄ und Zn₂TiO₄.

Vorzugsweise wird stabilisiertes Kieselsol verwendet. Unter "stabilisiertem Kieselsol" wird eine kolloidale Dispersion aus amorphen Siliziumoxidteilchen verstanden, bei der der pH-Wert in der Kieselsol-Lösung so eingestellt ist, dass es nicht zu einer Kondensation oder zur Abscheidung von Kieselgel kommt. Vorzugsweise ist der pH-Wert der Kieselsol-Lösung so eingestellt, dass es nicht zu einer Kondensation und zu keiner Abscheidung von Kieselgel kommt. Der pH-Wert liegt dabei üblicherweise in einem Bereich von pH 3 bis pH 5, oder von pH 9 bis pH 11. Besonders bevorzugt ist stabilisiertes Kieselsol, welches eine kolloidale Dispersion aus SiO₂-Partikeln ist. Ferner sind Kieselsole mit einem pH-Wert von etwa 10 bevorzugt. Vorzugsweise werden etwa 20 bis 40 %-ige, besonders bevorzugt 30 %-ige Lösungen aus kolloiddispersem Kieselsol als Ausgangslösungen eingesetzt. % bedeutet insbesondere Gew.-% bezogen auf das Gesamtgewicht der Lösung.

Die Partikel des Kieselsols, vorzugsweise die amorphen Siliziumoxidteilchen, weisen vorzugsweise eine Größe in einem Bereich von bis zu 300 nm, vorzugsweise von etwa 5 nm bis etwa 75 nm auf. Weiterhin ist ein Partikelgrößenbereich von etwa 5 nm bis etwa 15 nm sehr bevorzugt. Die spezifische Oberfläche liegt dabei vorzugsweise in einem Bereich von 200 bis 300 m²/g. Vorzugsweise entsteht das Kieselsol durch Aufwachsprozesse aus molekular gelöster Kieselsäure und nicht durch Redispergieren von festem, fein verteiltem, amorphen Siliziumdioxid. Besonders bevorzugt sind weitgehend alkali- und elektrolytfreie Kieselsole. Bevorzugt sind Kieselsole mit einer Dichte von 0,8 bis 1, 4 g/cm³, besonders bevorzugt ist eine Dichte von 1,1 bis 1,3 g/cm³, noch weiter bevorzugt ist eine Dichte von 1,2 g/cm³. Beispielsweise kann Levasil 300® (Bayer) als 30 %-ige Lösung verwendet werden.

Ammoniumpolyacrylsäure und/oder Alkalipolyacrylsäure und/oder Erdalkalipolyacrylsäure und/oder Polyacrylsäure können als Stabilisator, insbesondere als Dispersionsstabilisator, wirken. Stabilisatoren im Sinne der Erfindung sind Stoffe, die die Dispersion stabilisieren und eine Aggregation und/oder Agglomeration und/oder Reaggregation und/oder Reagglomeration der eindispergierten Teilchen verhindern. Im folgenden werden Stabilisatoren auch als Stabilisierungsmittel bezeichnet. Vorzugsweise stabilisieren die Stabilisatoren eine kolloidale Dispersion, vorzugsweise eine nichtnewtonsche kolloidale Dispersion. Ammoniumpolyacrylsäure und/oder Alkalipolyacrylsäure und/oder Erdalkalipolyacrylsäure und/oder Polyacrylsäure können als Spacer wirken. Spacer sind langkettige Moleküle, die als Abstandshalter die eindispergierten Partikel räumlich trennen und somit eine Aggregation und/oder Agglomeration und/oder eine Reagglomeration und/oder Reaggregation verhindern. Zusätzlich oder alternativ können Ammoniumpolyacrylsäure und/oder Alkalipolyacrylsäure und/oder Erdalkalipolyacrylsäure und/oder Polyacrylsäure auch als Bindemittel und/oder Haftvermittler dienen. Besonders bevorzugt wirkt Ammoniumpolyacrylsäure und/oder Alkalipolyacrylsäure und/oder Erdalkalipolyacrylsäure und/oder Polyacrylsäure als Stabilisator, insbesondere als Spacer. Ammoniumpolyacrylsäure und/oder Alkalipolyacrylsäure und/oder Erdalkalipolyacrylsäure und/oder Polyacrylsäure bewirken in ihrer Eigenschaft als Stabilisator, dass die photokatalytische Beschichtung auf dem keramischen Formkörper eine gleichmäßige Beschichtung ist, die vorzugsweise keine Agglomerate und/oder Aggregate enthält.

Vorzugsweise weisen Ammoniumpolyacrylsäure und/oder Alkalipolyacrylsäure und/oder Erdalkalipolyacrylsäure und/oder Polyacrylsäure ein Molekulargewicht von 2000 bis 30000 g/mol, besonders bevorzugt von 2000 bis 8000 g/mol, höchst bevorzugt von 2100 g/mol auf. Vorzugsweise wird bei dem erfindungsgemäßen Verfahren 0,001 % bis 0,05 %, vorzugsweise 0,005 % bis 0,05 %, besonders bevorzugt 0,005 % oder 0,01 % Ammoniumpolyacrylsäure und/oder Alkalipolyacrylsäure und/oder Erdalkalipolyacrylsäure und/oder Polyacrylsäure (bezogen auf das Gemisch der auf den Dachziegel aufgetragene Dispersion) eingesetzt. Ammoniumpolyacrylsäure und/oder Alkalipolyacrylsäure und/oder Erdalkalipolyacrylsäure und/oder Polyacrylsäure wirken als Spacer. Als Alkalipolyacrylsäure ist beispielsweise Natriumpolyacrylsäure geeignet. Alkali-, Erdalkali- und Ammoniumpolyacrylsäure im Sinne der Erfindung sind Alkalimetall-, Erdalkalimetall- und Ammoniumsalze der Polyacrylsäure. Bei den genannten %-Angaben handelt es sich um Gewichts-%-Angaben bezogen auf das Gemisch der auf den Dachziegel aufgetragenen Dispersion.

Alternativ zur Polyacrylsäure und/oder Ammoniumpolyacrylsäure und/oder Alkalipolyacrylsäure und/oder Erdalkalipolyacrylsäure im Sinne der Erfindung können auch andere Polycarbonsäuren oder deren Derivate eingesetzt werden. Polycarbonsäuren im Sinne der Erfindung sind organische Polymere mit einer Vielzahl von Carboxygruppen in den einzelnen Makromolekülen, die durch Homopolymerisation oder Copolymerisation ungesättigter ein- oder mehrbasiger Carbonsäuren hergestellt werden. Geeignete Polycarbonsäuren sind beispielsweise Polyacrylsäuren, Polymethacrylsäuren, Polymaleinsäurederivate, Alginsäure oder Pektinsäuren sowie Kombinationen davon. Geeignete Polycarbonsäurederivate sind beispielsweise Polyacrylamide oder Polyacrylsäureester (Polyacrylate), die allein oder in Kombination mit anderen Polycarbonsäuren und deren Derivaten eingesetzt werden. Beispielsweise können Copolymere der Acrylsäure mit Acrylamid eingesetzt werden.

Erfindungsgemäß werden in Schritt (a) vor oder nach dem Einbringen des Kieselsols und ggf. der Ammoniumpolyacrylsäure und/oder der Alkalipolyacrylsäure und ggf. Erdalkalipolyacrylsäure und/oder der Polyacrylsäure anorganische Partikel in die Flüssigphase unter Bereitstellung einer nichtnewtonschen kolloidalen Dispersion eingebracht oder es werden in Schritt (e) vor dem Einbringen der photokatalytisch-aktiven Partikel anorganische Partikel in die Flüssigphase unter Bereitstellung einer nichtnewtonschen kolloidalen Dispersion eingebracht.

Unter dem Begriff "nichtnewtonsche kolloidale Dispersion" wird im Sinne der Erfindung eine Dispersion verstanden, bei der raumfüllende Solvat- bzw. Adsorbatstrukturen ausgebildet sind. Dadurch weist die Dispersion ein verändertes Fließverhalten auf. Insbesondere weist die Dispersion ein nicht-newtonsches Fließverhalten auf.

Unter dem Begriff "gleichmäßige Beschichtung" wird im Sinne der Erfindung verstanden, dass die Partikelzahl an photokatalytisch-aktiven Partikeln pro Flächeneinheit auf dem keramischen Formkörper im Wesentlichen konstant ist, d.h. eine Abweichung von weniger als 10 %, vorzugsweise von weniger als 5 % aufweist.

Unter dem Begriff "nicht agglomeriert" wird im Sinne der Erfindung verstanden, dass keine signifikanten Partikelzusammenballungen vorliegen und bevorzugt mithin mehr als 90 Gew.-% der photokatalytisch-aktiven Partikel, vorzugsweise mehr als 95 Gew.-% der photokatalytisch-aktiven Partikel, weiter bevorzugt mehr als 98 Gew.-% der photokatalytisch-aktiven Partikel, vereinzelt, d.h. nicht zusammengeballt vorliegen.

Unter "Agglomeraten" werden im Sinne der Erfindung und in Übereinstimmung mit der DIN 53206 lockere Zusammenballungen von nicht verwachsenen Primärteilchen und/oder Aggregaten verstanden, die beim Dispergieren zerteilt werden können.

Unter "Aggregaten" werden im Sinne der Erfindung und in Übereinstimmung mit der DIN 53206 verwachsene Verbände von flächig aneinander gelagerten Primärteilchen verstanden. Die Aggregate sind dadurch gekennzeichnet, dass deren Oberfläche kleiner ist als die Summe der Oberflächen der Primärteilchen, die unter Ausbildung des Aggregats miteinander verwachsen sind. Die Aggregate können auch beim Dispergieren zerteilt werden. In der Regel liegt die Aggregatgröße bei etwa 200 nm und weniger.

Unter "Primärteilchen" werden im Sinne der Erfindung und in Übereinstimmung mit der DIN 53206 kleinste Teilchen, d.h. Einzelteilchen verstanden, aus denen pulverförmige Feststoffe aufgebaut sind. Die Primärteilchen dieser Erfindung weisen in der Regel eine Primärteilchengröße von etwa 5 bis etwa 45 nm auf. Besonders bevorzugt ist eine Primärteilchengröße von 20 bis 30 nm.

Das heißt, in der gleichmäßigen Beschichtung liegen die photokatalytisch-aktiven Partikel entweder als Primärteilchen und/oder als Aggregate mit einer Aggregatgröße von im Wesentlichen nicht mehr als 200 nm, jedoch im Wesentlichen nicht als Agglomerate, vorzugsweise ohne Agglomerate vor.

Unter dem Begriff erhöhte Haftfestigkeit im Sinne der Erfindung wird verstanden, dass wenn man mit einem Putztuch (7 x 9) cm² unter 520g Last 16 s über die photokatalytische Beschichtung reibt, keine oder keine wesentliche Beeinträchtigung der photokatalytischen Aktivität stattfindet.

Im Unterschied zu dem im Stand der Technik verwendeten Verfahren zur Herstellung von keramischen Formkörpern mit photokatalytisch-aktiver Beschichtung wird bei dem erfindungsgemäßen Verfahren eine Dispersion aus einer Flüssigphase und Kieselsol und ggf. Ammoniumpolyacrylsäure und/oder Alkalipolyacrylsäure und/oder Erdalkalipolyacrylsäure und/oder Polyacrylsäure und photokatalytisch aktiven Teilchen auf einen keramischen Formkörper aufgebracht. Überraschenderweise hat sich gezeigt, dass die Verwendung von Kieselsol und ggf. Ammoniumpolyacrylsäure und/oder Alkalipolyacrylsäure und/oder Erdalkalipolyacrylsäure und/oder Polyacrylsäure als Stabilisierungsmittel und/oder Bindemittel und/oder Haftvermittler zu einer Beschichtung von überragender mechanischer Stabilität über lange Zeiträume hinweg führt. Dies gilt insbesondere für die Beschichtung von engobierten Ziegeln, die aufgrund ihrer glatteren Oberfläche, Beschichtungen mit besonders guten Hafteigenschaften erfordern. Es wird vermutet, dass die besonderen Hafteigenschaften des Kieselsols und ggf. der Ammoniumpolyacrylsäure und/oder der Alkalipolyacrylsäure und/oder Erdalkalipolyacrylsäure und/oder der Polyacrylsäure die photokatalytischen Partikel an dem keramischen Festkörper fixieren und so zu einer überragenden mechanischen Stabilität über lange Zeiträume führen. Besonders bevorzugt wirkt das Kieselsol als Bindemittel und/oder als Haftvermittler. Vorzugsweise wird Kieselsol bei der Beschichtung von engobierten Dachziegeln verwendet. Das Kieselsol wirkt als Bindemittel und/oder Haftvermittler mit der Oberfläche zusammen, indem eine irreversible Kondensation des Kieselsols und/oder des Kieselsol mit der Ziegeloberfläche stattfindet. Der Haftvermittler kann eine verbesserte Haftung der photokatalytischen Beschichtung auf dem keramischen Formkörper bewirken, wodurch die Haftung der photokatalytischen Beschichtung über lange Zeiträume gewährleistet wird. Das Bindemittel kann die Stoffe, die in der in Schritt (b) oder (f) für die photokatalytischen Beschichtung bereitgestellte Dispersion enthalten sind, miteinander verbinden und die Viskosität erhöhen. Dadurch ermöglicht das Bindemittel ein gleichmäßiges Aufbringen der Dispersion und eine verbesserte Haftung der photokatalytischen Beschichtung auf dem keramischen Formkörper.

Ferner hat sich überraschenderweise gezeigt, dass die Verwendung von Kieselsol und ggf. Ammoniumpolyacrylsäure und/oder Alkalipolyacrylsäure und/oder Erdalkalipolyacrylsäure und/oder Polyacrylsäure eine besonders gleichmäßige photokatalytisch-aktive Beschichtung ergeben. Es wird angenommen, dass das Kieselsol und ggf. Ammoniumpolyacrylsäure und/oder Alkalipolyacrylsäure und ggf. Erdalkalipolyacrylsäure und/oder Polyacrylsäure als ein besonders effektives Stabilisierungsmittel wirken und die Dispersion der photokatalytisch aktiven Partikel stabilisieren und so einer Agglomeration bzw. Zusammenballung von photokatalytisch-aktiven Partikeln und/oder anorganischer Partikel entgegen wirken. In der so erhaltenen kolloidalen Dispersion sind die photokatalytisch-aktiven Partikel gleichmäßig verteilt,
wobei nahezu keine, vorzugsweise keine, Agglomerate bzw. Zusammenballungen von photokatalytischen Partikeln vorliegen.

Bei einer bevorzugten Ausführungsform werden die photokatalytisch aktiven Teilchen in eine nichtnewtonsche kolloidale Dispersion eingebracht, die in zwei Schritten hergestellt wird.

Um die nichtnewtonsche kolloidale Dispersion herzustellen, werden zuerst die Flüssigphase und anorganische Partikel vermengt. Anschließend werden die photokatalytisch-aktiven Partikel in diese nichtnewtonsche kolloidale Dispersion eingebracht. In diese nichtnewtonsche kolloidale Dispersion können gegebenenfalls noch Zusatzstoffe, beispielsweise Bindemittel bzw. Binder auf anorganischer und/oder organischer Basis und/oder farbgebende Mittel zugegeben werden.

Durch das getrennte Einbringen zuerst der anorganischen Partikel und nachfolgend der photokatalytisch-aktiven Partikel hat sich überraschenderweise herausgestellt, dass eine Agglomeration der photokatalytisch-aktiven Partikel weitgehend, vorzugsweise vollständig, vermieden werden kann. Das heißt, in einem ersten Schritt wird eine nichtnewtonsche kolloidale Dispersion bereitgestellt, in die nachfolgend in einem zweiten Schritt die photokatalytisch-aktiven Partikel eingebracht werden. Es wird vermutet, dass auf Grund der nichtnewtonschen kolloidalen Dispersion einer Agglomeration bzw. Zusammenballung von photokatalytisch-aktiven Partikeln entgegen gewirkt wird. In der erhaltenen nichtnewtonschen kolloidalen Dispersion sind die photokatalytisch-aktiven Partikel gleichmäßig verteilt, wobei nahezu keine, vorzugsweise keine, Agglomerate bzw. Zusammenballungen von photokatalytischen Partikeln vorliegen. Ähnlich oder ebenso wirkt sich auch das Einbringen von Kieselsol und ggf. Ammoniumpolyacrylsäure und/oder Alkalipolyacrylsäure und/oder Erdalkalipolyacrylsäure und/oder Polyacrylsäure auf die Verteilung der photokatalytischen Partikel aus. Vorzugsweise entsteht auch bei der Herstellung einer Dispersion aus photokatalytischen Partikeln und Kieselsol und ggf. Ammoniumpolyacrylsäure und/oder Alkalipolyacrylsäure und/oder Erdalkalipolyacrylsäure und/oder Polyacrylsäure eine kolloidale Dispersion, vorzugsweise eine nicht-newtonsche kolloidale Dispersion.

Durch die Verwendung der nichtnewtonschen kolloidalen Dispersion, in der die photokatalytisch-aktiven Partikel gleichmäßig verteilt sind, ist es möglich, den keramischen, vorzugsweise grobkeramischen, Formkörper gleichmäßig mit photokatalytisch-aktiven Partikeln zu beschichten.

Bei der Beschichtung wird die in Schritt (b) oder (f) bereitgestellte kolloidale Dispersion auf einen keramischen, vorzugsweise grobkeramischen, Formkörper unter Bereitstellung eines gleichmäßig beschichteten Formkörpers aufgebracht, der nachfolgend beispielsweise unter Wärmebeaufschlagung getrocknet wird.

Aufgrund der nichtnewtonschen kolloidalen Fließeigenschaften wird ein Entstehen von Ablaufspuren oder eine Veränderung der Schichtdicke weitgehend vermieden wird. Wegen der nicht linearen Viskosität haftet die nichtnewtonsche kolloidale Dispersion zuverlässig auf dem keramischen bzw. grobkeramischen Formkörper und erleichtert mithin die weitere Handhabung, ohne dass Agglomerate von photokatalytisch-aktiven Partikeln oder andere Inhomogenitäten auftreten.

Als Flüssigphase werden vorzugsweise wässerige Lösungen und/oder Wasser und/oder organische Lösungsmittel enthaltende Lösungen verwendet. Bevorzugt wird als Flüssigphase Wasser verwendet.

Die anorganischen Partikel weisen überwiegend, vorzugsweise zu wenigstens 80 Gew.-%, weiter bevorzugt zu wenigstens 95 Gew.-%, jeweils bezogen auf die Gesamtmenge der verwendeten anorganischen Partikel, eine geschlossene Oberfläche auf.

Die vorzugsweise verwendeten anorganischen Partikel weisen mithin eine äußerst geringe äußere Porosität auf, d.h. sie besitzen nahezu keine innere Oberfläche. Vorzugsweise sind die anorganischen Mittel nicht porös, d.h. besitzen keine innere Oberfläche.

Überraschenderweise hat sich gezeigt, dass poröse anorganische Partikel, d.h. Partikel mit wesentlicher innerer Oberfläche, zur Bildung der erwünschten nichtnewtonschen kolloidalen Eigenschaften ungeeignet sind.

Weiter umfassen die anorganischen Partikel zur Erzeugung der nichtnewtonschen kolloidalen Eigenschaften vorzugsweise wenigstens einen positiven und/oder wenigstens einen negativen Gerüstbildner.

Unter nichtnewtonschen kolloidalen Eigenschaften versteht man die Erscheinung, dass die Viskosität von Flüssigkeiten vom Spannungs- bzw. Deformationszustand abhängig ist und somit die Flüssigkeiten kein idealviskoses Fließen aufweisen.

Die negativen und positiven Gerüstbildner unterstützen in der Dispersion die Ausbildung der nichtnewtonschen kolloidalen Eigenschaften. Die negativen und die positiven Gerüstbildner bilden vorzugsweise ein Raumnetz aus, in dem Teilchen mit unterschiedlichen elektrostatischen Aufladungen, wie z.B. positiv geladene Aluminiumoxidteilchen in Wasser und z.B. in Wasser dissoziierte saure, negativ wirkende Silanolgruppe von Kieselsäure, in Wechselwirkung miteinander stehen.

Als positiver Gerüstbildner kann erfindungsgemäß auch Aluminiumhydroxid verwendet werden.

Die verwendeten anorganischen Partikel umfassen vorzugsweise SiO₂ und vorzugsweise Al₂O₃ und bilden ein Oxidgemisch.

Als SiO₂ wird bevorzugt Kieselsäure, weiter bevorzugt pyrogene Kieselsäure verwendet. Geeignete pyrogene Kieselsäure ist bei der Degussa AG, Deutschland, erhältlich. Beispielsweise hat sich Aerosil 200 als sehr verwendbar bei der vorliegenden Erfindung erwiesen.

Als Kieselsäure kann auch Fällungskieselsäure verwendet werden, wobei die Porosität bzw. die innere Oberfläche der Fällungskieselsäure möglichst gering sein sollte.

Die Al₂O₃-Partikel liegen vorzugsweise in der γ- oder δ-Modifikation vor. Als Al₂O₃ wird bevorzugt pyrogenes Al₂O₃ verwendet.

Als Aluminiumoxid wird bevorzugt Aluminiumoxid C verwendet, das kristallographisch der δ-Gruppe zuzuordnen ist und über eine starke oxidationskatalytische Wirkung verfügt. Als Sauerstoffionenleiter verstärkt δ- Al₂O₃ die photokatalytische Wirkung von Titandioxid und/oder ZnO und/oder Zinksilikatverbindungen und/oder Zinktitanatverbindungen.

Vorzugsweise sind sowohl die Al₂O₃-Partikel als auch die SiO₂-Partikel nicht poröse Partikel ohne innere Oberfläche.

Geeignetes Aluminumoxid C ist bei der Degussa AG, Deutschland erhältlich. Beispielsweise hat sich AEROSIL COK 84, eine Mischung von 84% AEROSIL 200 und 16% Aluminiumoxid C, als sehr verwendbar bei der vorliegenden Erfindung erwiesen.

Das Oxidgemisch wird vorzugsweise durch mechanisches Vermengen hergestellt.

Die Zusammensetzung des Oxidgemischs besteht vorzugsweise aus 50 bis 90 Gew.-% SiO₂ und 10 bis 50 Gew.-% Al₂O₃. Die Gesamtzusammensetzung der Bestandteile addieren sich dabei jeweils auf 100 Gew.-%.
Als weitere bevorzugte Zusammensetzung des Oxidgemischs hat sich eine Zusammensetzung von 80 bis 90 Gew.-% SiO₂ und 10 bis 20 Gew.-% Al₂O₃ als sehr geeignet erwiesen, wobei die Gesamtzusammensetzung der Bestandteile sich jeweils auf 100 Gew.-% addieren.

Somit enthält die bevorzugte bereitgestellte nichtnewtonsche kolloidale Dispersion vorzugsweise eine SiO₂/Al₂O₃-Gerüststruktur, wobei SiO₂ die Aufgabe als negativer Gerüstbildner und Al₂O₃ die Aufgabe als positiver Gerüstbildner bei der Erzeugung bzw. der Unterstützung der Ausbildung der nichtnewtonschen kolloidalen Struktureigenschaften übernimmt.

Die gerüstbildenden anorganischen Partikel und die photokatalytisch aktiven Partikel werden vorzugsweise unter Anlegung von Unterdruck in die Flüssigphase gesaugt. Vorzugsweise beträgt der Unterdruck 10 bis 500 mbar, weiter bevorzugt 10 bis 250 mbar, noch weiter bevorzugt 10 bis 90 mbar, besonders bevorzugt 50 bis 70 mbar. Während des Einsaugvorgangs wird das Oxidgemisch entgast und ein Auseinanderreißen und direktes Benetzen der Partikel bewirkt. Überraschenderweise hat sich gezeigt, dass der Einsaugvorgang der anorganischen Partikel in die Flüssigphase die Ausbildung der nichtnewtonschen kolloidalen Dispersion wesentlich begünstigt, da die Partikelgrößen vor Benetzung mit der Flüssigphase ausreichend klein gehalten werden.

Die Flüssigphase wird während der Zugabe des Kieselsols und ggf. Ammoniumacrylsäure und/oder Alkalipolyacrylsäure und/oder Erdalkalipolyacrylsäure und/oder Polyacrylsäure, der anorganischen Partikel und der photokatalytischen Partikel vorzugsweise zirkuliert. Insbesondere bei der Zugabe der anorganischen Partikel zur Bildung einer nichtnewtonschen kolloidalen Dispersion ist eine Zirkulation besonders bevorzugt.

Unter Zirkulieren wird ein Mischverfahren verstanden, bei dem z.B. ein mechanisches Hochfrequenzgerät, bspw. ein Rotor-Stator-Aggregat der Firma PUK oder IKA, Deutschland verwendet werden kann. Dabei werden über einen Rotor die Partikel zunächst eingesaugt und anschließend solange zirkuliert bis die Partikel eingetragen sind. Anschließend kann noch zusätzlich weiter dispergiert werden. In einer anderen Ausführungsform erzeugt der Rotor einen Unterdruck, über den die Partikel eingesaugt und mit der Flüssigphase benetzt werden. Anschließend wird dispergiert, um mögliche Aggregate/Agglomerate zu vermindern. Besonders bevorzugt wird die Aggregat/Agglomeratbildung durch eine zusätzliche Beschallung mit Ultraschall verringert. Bei einer zusätzlichen Beschallung mit Ultraschall liegen vorzugsweise 95%, besonders bevorzugt 100 % der Partikel in einer Partikelgröße kleiner 1 µm vor.

Das Mischen kann auch durch andere Verfahren wie beispielsweise Rühren, Schütteln etc. durchgeführt werden.

Vorzugsweise erfolgt das Zirkulieren für einen Zeitraum von 1 s/l bis 100 s/l, weiter bevorzugt von 1 bis 10 s/l, besonders bevorzugt von 1,5 bis 3,0 s/l Dispersion.

Vorzugsweise liegt die Temperatur der Dispersion während des Zirkulierens in einem Bereich von 10 bis 35 °C. Weiter bevorzugt überschreitet die Temperatur der Dispersion während des Zirkulierens nicht 29 °C.

Gemäß dem erfindungsgemäßen Verfahren werden anschließend photokatalytisch-aktive Partikel in die nichtnewtonsche kolloidale Dispersion, die besonders bevorzugt eine SiO₂/Al₂O₃-Gerüststruktur enthält, eingebracht und aufgenommen.

Die Dispersion wird nach dem Einbringen der photokatalytisch-aktiven Partikel erneut zirkuliert. Während des Zirkulierens der Dispersion werden die photokatalytisch-aktiven Partikel von der Dispersion oder der nichtnewtonschen kolloidalen Dispersion ohne wesentliche, vorzugsweise ohne Agglomeration aufgenommen.

Vorzugsweise liegt die Temperatur der Dispersion während des Zirkulierens in einem Bereich von 10 bis 35 °C. Weiter bevorzugt überschreitet die Temperatur der Dispersion während des Zirkulierens nicht 29 °C.

Während des Zirkulationsvorgangs werden die photokatalytisch-aktiven Partikel, vorzugsweise TiO₂- Partikel, in die Dispersion oder die nichtnewtonsche kolloidale Dispersion, die vorzugsweise eine SiO₂/Al₂O₃-Gerüststruktur aufweist, aufgenommen.

Nach der Einbringung der photokatalytisch-aktiven Partikel wird vorzugsweise zur Herabsetzung der Viskosität der Dispersion oder der nichtnewtonschen kolloidalen Dispersion weitere Flüssigphase hinzugefügt. Die Menge an zuzusetzender Flüssigphase kann in Abhängigkeit von dem Verfahren zur Aufbringung der Dispersion oder der nichtnewtonschen kolloidalen Dispersion auf den keramischen bzw. grobkeramischen Formkörper eingestellt werden. Beispielsweise kann die Dispersion oder die nichtnewtonsche kolloidale Dispersion durch Versprühen auf den Formkörper aufgebracht werden. Die Viskosität der Dispersion oder der kolloidalen Dispersion kann dabei beispielsweise in Abhängigkeit von der Art der Sprühdüse oder der Sprühmenge pro Zeiteinheit eingestellt werden. Das Aufsprühen der Dispersion erfolgt vorzugsweise bei Umgebungstemperatur bis 70°C. Besonders bevorzugt beträgt die Temperatur dabei 50 bis 60 °C. Die Beschichtung wird vorzugsweise in einer Dicke von 1,5 bis 3,5 mg/cm² aufgetragen

Die Zugabe der Flüssigphase in die Dispersion oder nichtnewtonsche kolloidale Dispersion findet vorzugsweise unter aktiver Vermischung statt, vorzugsweise durch Zugabe der Flüssigphase während einer Zirkulation oder Bewegung der Dispersion oder der nichtnewtonschen kolloidalen Dispersion. Vorzugsweise wird während des Zirkulationsvorganges die Dispersion bei einer Wellenlänge von 300 bis 400 nm bestrahlt.

Die Temperatur der Dispersion liegt während des Vermischens der Flüssigkeitsphase vorzugsweise in einem Bereich von 15 bis 40 °C, besonders bevorzugt 20 bis 35°C. Bevorzugt überschreitet die Temperatur während des Vermischens nicht 29 °C.

Die so erhaltene Dispersion oder nichtnewtonsche kolloidale Dispersion weist in vorteilhafter Weise eine hohe gleichmäßige Beschaffenheit auf.

Die Dispersion oder die nichtnewtonsche kolloidale Dispersion kann beispielsweise auch durch Gießen, Streichen, Sprühen, Schleudern, etc. auf den keramischen, vorzugsweise grobkeramischen, Formkörper aufgebracht werden. Selbstverständlich kann der keramische, vorzugsweise grobkeramische, Formkörper auch in die Dispersion eingetaucht werden.

Als besonders bevorzugt hat es sich erwiesen, dass der keramische, vorzugsweise grobkeramische, Formkörper während des Aufbringens der Dispersion oder der nichtnewtonschen kolloidalen Dispersion eine Temperatur von 30 bis 70°C aufweist. Bevorzugterweise beträgt die Temperatur des keramischen, vorzugsweise grobkeramischen, Formkörpers 50 bis 60°C.

Vorzugsweise wird die Dispersion oder die nichtnewtonsche kolloidale Dispersion in einer solchen Schichtdicke aufgebracht, dass nach dem Trocknen und/oder Brennen ein keramischer, vorzugsweise grobkeramischer, Formkörper mit einer photokatalytisch-aktiven und porösen Beschichtungszusammensetzung in einer Dicke von etwa 50 nm bis etwa 50 µm, vorzugsweise etwa 100 nm bis etwa 1 µm, erhalten wird.

Dabei bildet sich die Schicht nicht nur in den Poren bzw. Kapillaren der Oberfläche, sondern auch auf der Oberfläche des keramischen bzw. grobkeramischen Formkörpers aus. Auf diese Weise können partiell Schichtdicken der Beschichtung ausgebildet sein, die größer als der mittlere Durchmesser der Poren bzw. Kapillaren sind, die üblicherweise in einem Bereich von 0,1 µm bis 5 µm liegen.

Der Auftragsmenge der Dispersion oder der nichtnewtonschen kolloidalen Beschichtungsdispersion pro Fläche kann bspw. in Abhängigkeit von der gewünschten Menge bzw. photokatalytischen Aktivität pro Flächeneinheit eingestellt werden.

Nach Aufbringen der Beschichtung wird der beschichtete keramische, vorzugsweise grobkeramische, Formkörper getrocknet und/oder gehärtet.

Die Trocknung und/oder Härtung kann bei einer Temperatur von etwa 200°C bis 600°C, vorzugsweise etwa 300°C, erfolgen. Die anorganischen und die photokatalytisch-aktiven Partikel werden hierdurch zuverlässig an der Grobkeramik oder Keramik befestigt.

Die Gleichmäßigkeit der bei dem erfindungsgemäßen Verfahren verwendeten Dispersion oder der nichtnewtonschen kolloidalen Dispersion kann überprüft werden. Beispielsweise kann ein Probenvolumen entnommen und zwischen Objektträgern aus Glas eingeschlossen und nachfolgend visuell überprüft werden. Die Dispersion oder die nichtnewtonsche kolloidale Dispersion bildet dabei zwischen den Objektträgern einen transparenten Monofilm aus, d.h. die Komponenten dieses System bilden über das gesamte Volumen eine gleichmäßige Verteilung ohne erkennbare Partikel-Agglomeration aus.

Die durchschnittliche Partikelgröße in der Dispersion oder der nichtnewtonschen kolloidalen Dispersion ist vorzugsweise kleiner als 3 µm, weiter bevorzugt kleiner als 1 µm.

Gemäß einer weiteren Ausführungsform der Erfindung ist die absolute Partikelgröße in der Dispersion oder der nichtnewtonschen kolloidalen Dispersion kleiner als 3 µm, weiter bevorzugt kleiner als 1µm. In der Dispersion oder der nichtnewtonschen kolloidalen Dispersion können beispielsweise 100% der Partikel in einer Partikelgröße von kleiner als 3 µm, weiter bevorzugt 95% der Partikel in einer Partikelgröße von kleiner als 2 µm, und weiter bevorzugt 85% der Partikel in einer Partikelgröße von kleiner als 1 µm, vorliegen. Bei einer zusätzlichen Beschallung mit Ultraschall liegen 95% der Partikel, vorzugsweise 100 % der Partikel in einer Partikelgröße kleiner 1 µm vor.

Das partikuläre Material, d.h. die anorganischen Partikel, vorzugsweise SiO₂- und Al₂O₃-Partikel, und die photokatalytisch-aktiven Partikel, vorzugsweise TiO₂-Partikel, in der nichtnewtonschen kolloidalen Dispersion kann unter Verwendung von Bindemitteln an dem keramischen bzw. grobkeramischen Formkörper zusätzlich fixiert werden. Beispielsweise können als Bindemittel Kieselsole verwendet werden, die das partikuläre Material an der Oberfläche des keramischen bzw. grobkeramischen Formkörpers, vorzugsweise grobkeramischen, Formkörpers fixieren.

Erfindungsgemäß ist Kieselsol und ggf. Ammoniumacrylsäure und/oder-Alkalipolyacrylsäure und/oder Erdalkalipolyacrylsäure und/oder Polyacrylsäure als Stabilisierungsmittel und/oder Bindemittel und/oder Haftvermittler in der photokatalytischen Schicht enthalten. Zusätzlich kann/können aber das/die Stabilisierungsmittel und/oder das/die Bindemittel und/oder der/die Haftvermittler vor Schritt (c) oder (g) des erfindungsgemäßen Verfahrens auf den keramischen bzw. grobkeramischen Formkörper aufgebracht und erst danach die Dispersion gemäß Schritt (c) oder (g) auf den keramischen bzw. grobkeramischen Formkörper aufgebracht werden.

Bei der vorliegenden Erfindung ist es jedoch nicht unbedingt notwendig, eine zusätzliche Bindemittelschicht zur Fixierung von partikulärem Material, beispielsweise von photokatalytisch-aktiven Partikeln, zu verwenden. Die Partikel können auch durch eine sinterähnliche Verbindung mit dem keramischen bzw. grobkeramischen Formkörper verbunden werden.

Die Partikel der Dispersion bzw. nichtnewtonschen kolloidalen Dispersion weisen vorzugsweise eine Größe in einem Bereich von bis zu 2000 nm, vorzugsweise von etwa 5 nm bis etwa 700 nm auf. Weiterhin ist ein Partikelgrößenbereich von etwa 5 nm bis etwa 25 bis 50 nm sehr bevorzugt.

Im Falle eines mit TiO₂-Partikeln erfindungsgemäß beschichteten keramischen, vorzugsweise grobkeramischen, Formkörpers, beispielsweise einem Dachziegel, führen die TiO₂-Partikel auf der Oberfläche der Grobkeramik zu einer Lichtstreuung, die sich im sichtbaren Bereich dadurch bemerkbar macht, dass die Grobkeramik ein bläulich/violettes Irisieren aufweist. Dieser optische Effekt ist vermutlich auf den TyndallEffekt zurückzuführen. Das heißt, der rote Farbton einer gebrannten Grobkeramik, beispielsweise eines Ton-Dachziegels, wird für einen Betrachter mehr in Richtung dunkelrot bzw. braunrot verschoben. Durch die Zugabe des Kieselsols zu der photokatalytischen Schicht wird der Tyndalleffekt verringert. Ferner weist auch die photokatalytische Schicht durch die Zugabe der oben genannten Bindemittel, insbesondere Kieselsol, Antireflex-Eigenschaften auf und verringert die Weißfärbung.

Die photokatalytisch-aktive Beschichtung ist eine hochporöse Struktur, d.h. die spezifische Oberfläche der katalytisch-aktiven, porösen Beschichtung liegt in einem Bereich von 1 m²/g bis 200 m²/g. Für erfindungsgemäße photokatalytische Beschichtungen, die ZnO enthalten, liegt die spezifische Oberfläche für die ZnO-Partikel in einem Bereich von 10 bis 30 m²/g, besonders bevorzugt sind 20 m²/g. Für erfindungsgemäße photokatalytische Beschichtungen, die TiO₂ enthalten, ist ein Bereich von etwa 40 m²/g bis etwa 150 m²/g für die TiO₂₋Partikel bevorzugt; weiter bevorzugt liegt die spezifische Oberfläche in einem Bereich von 40 m²/g bis etwa 100 m²/g. Beispielsweise kann TiO₂ P25 von der Firma Degussa mit einer spezifischen Oberfläche von ungefähr 50 m²/g oder TiO₂ P90 von der Firma Degussa mit einer spezifischen Oberfläche von 80 bis 90 m²/g verwendet werden.

Die photokatalytisch-aktive Beschichtung ist sowohl auf der Oberfläche der Keramik bzw. Grobkeramik als auch in dem Kapillargefüge der Keramik bzw. Grobkeramik aufgebracht. Das heißt, die Porenöffnungen und die freien Flächen in den Kapillarröhren sind mit der photokatalytisch-aktiven Beschichtung versehen. Die Beschichtung ist dabei vorzugsweise bis zu einer Tiefe von etwa 2 mm in dem unmittelbar unter der Oberfläche des grobkeramischen Formkörpers liegenden Kapillargefüge, vorzugsweise in gleichmäßiger Verteilung der Partikelgrößen und Partikelarten aufgebracht. Vorzugsweise erfolgt das Aufbringen der Beschichtung bis zu einer Tiefe von etwa 1 mm, vorzugsweise ist die Beschichtung in einer Tiefe bis zu 500 µm, weiter bevorzugt bis zu einer Tiefe von bis zu 250 µm aufgebracht. Die Tiefe ist dabei in vertikaler Richtung, bezogen auf die Oberfläche des Formkörpers, in das Innere des Formkörpers angegeben.

Gemäß einer bevorzugten Weiterbildung ist der freie Atmungsquerschnitt des keramischen bzw. grobkeramischen Formkörpers durch die aufgebrachte poröse Beschichtung um weniger als 10 %, vorzugsweise weniger als 5 %, bezogen auf den freien Atmungsquerschnitt eines nicht beschichteten keramischen bzw. grobkeramischen Formkörpers, herabgesetzt.

Weiter bevorzugt ist der freie Atmungsquerschnitt um weniger als etwa 2 %, noch weiter bevorzugt um weniger als etwa 1 %, herabgesetzt.

Der mittlere Durchmesser der Poren bzw. Kapillaren einer Grobkeramik liegt üblicherweise in einem Bereich von 0,1 µm bis 5 µm, vorzugsweise 0,1 µm bis 0,3 µm.

Die Keramik bzw. Grobkeramik, vorzugsweise ein Dachziegel, Ziegel, Klinker, Vormauerstein oder Fassadenelement, weist mithin äußerst vorteilhaft eine photokatalytisch-aktive Beschichtung in der Porenstruktur auf, so dass in den Poren abgelagerten Verunreinigungen wirksam oxidiert und nachfolgend bei Beregnung oder Berieselung leicht abgespült werden.

Da die Porenstruktur der Keramik bzw. Grobkeramik durch die aufgebrachte Beschichtung nicht wesentlich verengt wird, können die Schmutzpartikel ohne weiteres aus den Poren herausgespült werden.

Die erfindungsgemäße Keramik bzw. Grobkeramik zeigt mithin auch nach längerem Gebrauch, insbesondere unter natürlichen Umwelt- und Bewitterungsbedingungen, aufgrund der verbesserten Selbstreinigungseigenschaft eine sauberes und attraktives Aussehen.

Mit einer spezifischen Oberfläche von etwa 50 m²/g wird eine sehr zufriedenstellende katalytische Aktivität der aufgebrachten Beschichtung erhalten. Dabei liegt die mittlere Schichtdicke der Beschichtung vorzugsweise in einem Bereich von etwa 50 nm bis etwa 50 µm, weiter bevorzugt von etwa 100 nm bis etwa 1 µm. Dabei ist die Schicht nicht nur in den Poren bzw. Kapillaren der Oberfläche, sondern auch auf der Oberfläche des keramischen bzw. grobkeramischen Formkörpers ausgebildet. Auf diese Weise können partiell Schichtdicken der Beschichtung ausgebildet sein, die größer als der mittlere Durchmesser der Poren bzw. Kapillaren sind, die üblicherweise in einem Bereich von 0,1 µm bis 5 µm liegen. Mit einer Schichtdicke von bis zu 1 µm wird eine sehr zufriedenstellende katalytische Aktivität erhalten.

Mit der erfindungsgemäßen photokatalytisch-aktiven Beschichtung werden auf dem grobkeramischen Formkörper sich ablagernde(r) bzw. einlagernde(r) Schimmel, Pilzhyphen, Pflanzenwuchs, beispielsweise Moos, Algen etc., bakterielle Verunreinigungen etc., photochemisch abgebaut und entfernt. Die photokatalytische Aktivität der porösen Beschichtung ist bei Umgebungstemperaturen beispielsweise bei Oberflächentemperaturen von über 10 °C ausreichend, um die genannten Stoffe bzw. Verunreinigungen zu oxidieren und somit abzubauen. Die oxidierten Substanzen weisen ein vermindertes Haftungsvermögen auf und werden bei Beregnung bzw. Berieselung mit Wasser leicht von der Oberfläche des erfindungsgemäßen Formkörpers abgespült. Titandioxid, Zinkoxid, Zinksilikatverbindungen, Zinktitanatverbindungen, beispielsweise Zn₂SiO₄ und Zn₂TiO₄, weisen aufgrund der photokatalytischen Eigenschaften diese reinigenden Eigenschaften auf. Titandioxid, Zinkoxid, Zinksilikatverbindungen, Zinktitanatverbindungen, beispielsweise Zn₂SiO₄ und Zn₂TiO₄, weisen biostatische Eigenschaften auf. Biostatische Eigenschaften bedeutet, dass die Vermehrung von sich ablagernde(n) bzw. einlagernde(n) Schimmel, Pilzhyphen, Pflanzenwuchs, beispielsweise Moos, Algen etc., bakterielle Verunreinigungen verringert werden. Durch das hohe Haftvermögen der erfindungsgemäßen photokatalytischen Beschichtung ist es möglich photokatalytische Beschichtungen auf keramischen Formkörpern, insbesondere Dachziegeln herzustellen, die ZnO enthalten, ohne dass es zur Freisetzung von grundwasssergefährdenden und umweltgefährdenden Mengen an ZnO kommt und der keramische Formkörper eine lange Zeit stabile biozide photokatalytische Beschichtung aufweist.

Es wird vermutet, dass die photokatalytisch-aktive Beschichtung zum einen unmittelbar auf die organischen Verunreinigungen oxidativ einwirken kann. Zum anderen wird angenommen, dass die oxidative Wirkung der photokatalytisch-aktiven Beschichtung mittelbar durch die Erzeugung von Sauerstoff-Radikalen erfolgt, die nachfolgend die Verschmutzungsstoffe bzw. Verunreinigungen oxidieren und mithin abbauen.

Die photokatalytisch-aktiven Partikel weisen überwiegend, vorzugsweise zu wenigstens 80 Gew.-%, weiter bevorzugt zu wenigstens 95 Gew.-%, jeweils bezogen auf die Gesamtmenge der verwendeten photokatalytisch-aktiven Partikel, eine geschlossene Oberfläche auf.

Die vorzugsweise verwendeten photokatalytisch-aktiven Partikel weisen mithin eine äußerst geringe Porosität auf. Vorzugsweise sind die photokatalytisch-aktiven Partikel nicht porös.

Gemäß einer bevorzugten Weiterbildung der Erfindung weisen sowohl die anorganischen Partikel zur Erzeugung der nichtnewtonschen kolloidalen Struktur als auch die photokatalytisch-aktiven Partikel eine im Wesentlichen geschlossene, vorzugsweise geschlossene, Oberfläche auf, d.h. sind vorzugsweise sämtlich nicht porös.

Gemäß einer bevorzugten Ausführungsform umfasst das photokatalytisch-aktive Material in der Beschichtung TiO₂-Partikel und ZnO-Partikel und ggf. ZrO₂-Partikel und/oder Fe₂O₃-Partikel und/oder andere Metalloxide.

Als Titandioxid wird hierbei vorzugsweise Titandioxid der Anatas-Struktur verwendet.

Es ist bevorzugt, dass das TiO₂ wenigstens teilweise in der Anatas-Struktur, vorzugsweise zu wenigstens 40 Gew.-%, bevorzugt zu wenigstens 70 Gew.-%, weiter bevorzugt zu wenigstens 80 Gew.-%, bezogen auf die Gesamtmenge an TiO₂, vorliegt.

Als sehr geeignet hat sich TiO₂ erwiesen, das in einer Mischung aus etwa 70 - 100 Gew.-% Anatas bzw. etwa 30 - 0 Gew.-% Rutil vorliegt. Die Gesamtzusammensetzung der Bestandteile addieren sich dabei jeweils auf 100 Gew.-%.

Gemäß einer weiteren bevorzugten Weiterbildung der Erfindung liegt das TiO₂ zu etwa 100 % in der Anatas-Struktur vor.

Gemäß einer weiteren bevorzugten Ausführungsform der vorliegenden Erfindung ist das TiO₂ eine Mischung von etwa 80 Gew.-% Anatas bzw. etwa 20 Gew.-% Rutil.

Das verwendete TiO₂ der vorliegenden Verbindung umfasst vorzugsweise pyrogenes TiO₂.

Vorzugsweise wird das bei der vorliegenden Erfindung verwendete TiO₂ durch Flammenhydrolyse von TiCl₄ als hochdisperses TiO₂ erhalten, welches vorzugsweise eine Partikelgröße von etwa 15 nm bis 30 nm, vorzugsweise 21 nm aufweist.

Beispielsweise kann hierfür das unter der Bezeichnung Titandioxid P 25 von der Degussa AG, Deutschland erhältliche Titandioxid verwendet werden, das aus einem Anteil von 70 % Anatasform und 30 % Rutil besteht. Äußerst vorteilhaft absorbiert Titandioxid in der Anatasform UV-Licht mit Wellenlängen von kleiner als 385 nm. Rutil absorbiert UV-Licht mit einer Wellenlänge von kleiner als 415 nm.

Erfindungsgemäß umfassen die photokatalytisch-aktiven Partikel TiO₂ und ZnO. Besonders bevorzugt ist ZnO mit einer Oberfläche > 20 m²/g (BET). Vorzugsweise weist das ZnO eine durchschnittliche Partikelgröße von 20 bis 30, besonders bevorzugt von 25 nm auf. Vorzugsweise treten Aggregate von 100 bis 140 nm auf. Die Reinheit ist vorzugsweise > 99,5 %. Vorzugsweise wird pyrogenes, durch Flammenhydrolyse hergestelltes ZnO verwendet. Vorzugsweise weist das ZnO zu wenigstens 70 %, weiter bevorzugt zu wenigstens 80 %, besonders bevorzugt zu 100 % die kubische Modifikation auf. Die Prozentangaben bedeuten Gew.-% und beziehen sich auf die Gesamtmenge ZnO. Vorzugsweise weist das ZnO zu 80 %, besonders bevorzugt zu 100 % die kubische Modifikation auf. Beispielsweise kann das unter der Bezeichnung AdNano® von der Degussa AG, Deutschland erhältliche ZnO verwendet werden.

Überraschenderweise konnte festgestellt werden, dass ZnO die photokatalytische Wirkung von TiO₂ verstärkt. Zum einen bewirkt die Zugabe von ZnO zu der photokatalytischen Schicht eine Verschiebung der Absorptionsbanden in den sichtbaren Bereich. Zum anderen wirkt ZnO als UV-Reflektor, wobei die entstehende Streustrahlung dazu führt, dass das TiO₂ von mehreren Seiten bestrahlt wird. Durch diese beiden Effekte wird die photokatalytische Wirkung verstärkt. Ferner bewirkt die Zugabe von ZnO, dass die photokatalytische Schicht hydrophob wird und das Aufbringen einer zusätzlichen hydrophoben Schicht nicht mehr notwendig ist. Hierdurch erhält man die Kombination von photokatalytischen Eigenschaften in einer Schicht und vermeidet die Probleme, die durch das nachträgliche Aufbringen einer hydrophoben, UV-instabilen Schicht entstehen. Das Aufbringen einer zusätzliche hydrophoben Schicht ist grundsätzlich möglich, aber nicht mehr unbedingt notwendig, um eine hydrophobe katalytische Beschichtung zu erreichen.

Vorzugsweise sind in der porösen photokatalytisch aktiven Beschichtung TiO₂ und ZnO in einem in einem Verhältnis von 1:5 bis 5:1 enthalten. Besonders bevorzugt ist TiO₂ und ZnO in einem in einem Verhältnis von 2,5:1 bis 1,0:1. Am meisten bevorzugt ist TiO₂ und ZnO in einem Verhältnis von 2:1 und 1:1.

In einer bevorzugten Ausführungsform umfaßt die photokatalytische Schicht einen Feststoffgehalt von

Kieselsol: TiO₂:ZnO von 1,5 : 0,4 : 0,4 oder 1,5 : 0,4: 0,2 oder SiO₂/Al₂O₃: TiO₂:ZnO von 0,84/0,16 : 0,4 : 0,4 oder 0,84/0,16 : 0,4 : 0,2
wobei die Summe des Feststoffgehaltes 1,8 ist. Die angegebene Werte können in einem Bereich von +/- 20 % variieren.

Besondere Ausführungsformen des keramischen bzw. grobkeramischen Formkörpers sehen vor, dass zwischen der Keramik bzw. Grobkeramik und der photokatalytisch-aktiven Beschichtung eine Engobe und/oder auf der Keramik bzw. Grobkeramik abgewandten Seite der photokatalytisch-aktiven Beschichtung eine Engobe aufgetragen wird.

Unter Engobe wird hier eine keramische Beschichtung verstanden, die eine offene Porosität aufweist und die das visuelle Erscheinungsbild des damit beschichteten Formkörpers verändern kann.

Unter Engobe werden im Sinne der Erfindung sowohl eine Engobe als auch mehrere Engoben verstanden. Die Engoben sind üblicherweise Spezialtone, die gegebenenfalls farbgebende Mittel aufweisen und zum Färben von Keramiken bzw. Grobkeramiken verwendet werden. Die Engoben werden in der Regel durch Aufbrennen mit der Keramik bzw. Grobkeramik fest verbunden und sind wetterbeständig.

Als farbgebende Mittel werden vorzugsweise anorganische Pigmente verwendet, wie z.B. Eisenoxide, Kobaltoxid, Manganoxid oder andere Farbpigmente.

Der mit dem erfindungsgemäßen Verfahren zu beschichtende Formkörper kann mithin bereits engobiert sein und/oder nach Aufbringung der photokatalytisch-aktiven Beschichtung engobiert werden.

Die erfindungsgemäße Grobkeramik kann auch mit Erhebungen und Vertiefungen versehen sein, die einen Selbstreinigungseffekt der Oberfläche des keramischen bzw. grobkeramischen Formkörpers bewirken. Dieser Selbstreinigungseffekt wird auch als Lotuseffekt bezeichnet. Die Erhebungen und Vertiefungen liegen im Allgemeinem in einem Bereich von etwa 50 bis 5 000 nm, vorzugsweise von 100 bis 500 nm.

Die Erhebungen können durch die bei dem erfindungsgemäßen Verfahren verwendeten anorganischen Partikel, vorzugsweise SiO₂- und/oder Al₂O₃-Partikel, und/oder durch die photokatalytisch-aktiven Partikel, vorzugsweise TiO₂-Partikel, erzeugt werden. Es ist aber auch möglich, bei Schritt (c) oder (g) des erfindungsgemäßen Verfahrens weiteres partikuläres Material zur Erzeugung der Erhebungen zuzusetzen.

Nach dem Erwärmungs- und/oder Brennvorgang kann zur weiteren Verstärkung des Lotuseffektes eine Hydrophobierung der erhaltenen Beschichtung durchgeführt werden.

Als Hydrophobierungsmittel werden vorzugsweise anorganisch-organische Hybridmoleküle wie beispielsweise Siloxane, insbesondere Polysiloxane, verwendet.

Weiterhin haben sich als Hydrophobierungsmittel Ormocere, Alkylsilane und/oder Fluorsilane als geeignet erwiesen. Diese werden vorzugsweise in 30 bis 50%-igen Lösungen, besonders bevorzugt in 42%-igen Lösungen aufgetragen.

Selbstverständlich können aber auch andere Hydrophobierungsmittel, beispielsweise Alkali- oder Erdalkalisiliconate, verwendet werden. Als sehr geeignet haben sich Natrium- und/oder Kaliummethylsiliconat, vorzugsweise mit einem Molekulargewicht im Bereich von 90 bis 200 g/mol, weiter bevorzugt von 110 bis 140 g/mol, erwiesen.

Die Hydrophobierungsmittel können durch ein geeignetes Verfahren, beispielsweise Sprühen, Gießen, Schleudern, Bestreuen oder Eintauchen aufgebracht werden.

Nach dem Erwärmungsschritt und der gegebenenfalls durchgeführten Hydrophobierung kann bei einer bevorzugten Ausführungsform eine Nachbehandlung der hergestellten photokatalytisch-aktiven, porösen oxidkeramischen Beschichtung durchgeführt werden. Die Nachbehandlung erfolgt durch Einstrahlung von Laserlicht, NIR- oder UV-Licht. Durch diese Nachbehandlung kann die Haftung zwischen der photokatalytisch-aktiven Beschichtung und dem keramischen, vorzugsweise grobkeramischen Formkörper verbessert werden.

Es hat sich gezeigt, dass der erfindungsgemäße keramische, vorzugsweise grobkeramische, Formkörper eine photokatalytische Beschichtung mit verbesserter mechanischer Stabilität und verbesserten Hafteigenschaften aufweist. Ferner besitzt der erfindungsgemäße keramische, vorzugsweise grobkeramische, Formkörper ein verbessertes äußeres Erscheinungsbild. Die photokatalytisch-aktive, poröse Beschichtung weist eine homogene, d.h. gleichmäßige Verteilung von TiO₂-Partikeln und der ZnO-Partikel und ggf. anderer photokatalytisch aktiver Partikel auf.

Dabei liegen die TiO₂-Partikel und andere photokatalytisch aktive Partikeln im wesentlichen vereinzelt, d.h. ohne signifikante Agglomerationen in der photokatalytisch-aktiven Beschichtung vor. Somit weist die erfindungsgemäße Keramik bzw. Grobkeramik über die gesamte Oberfläche eine im wesentlichen gleiche photokatalytische Aktivität auf. Das heißt, die erfindungsgemäße Keramik bzw. Grobkeramik erscheint visuell für einen Betrachter als einheitlich.

Die mit dem erfindungsgemäßen Verfahren aufgebrachte Beschichtung bzw. der erfindungsgemäße keramische Formkörper weist vorzugsweise bei einer UV-Bestrahlung von 1mW/cm² oder mehr und mit einer Wellenlänge von 320 nm bis 400 nm eine mit Silbernitrat nachweisbare photokatalytische Aktivität auf. Die photokatalytische Aktivität kann auch durch die Entfärbung einer Lösung eines organischen Farbstoffs, bspw. Methylenblau, nachgewiesen werden.

### Bevorzugte Ausführungsformen:

1. Verfahren zur Herstellung eines keramischen Formkörpers mit photokatalytisch-aktiver Beschichtung nach Anspruch 1 oder 2, wobei:
   vorzugsweise beim Einbringen der anorganischen und/oder photokatalytisch aktiven Partikel diese unter Unterdruck in die Flüssigphase gesaugt werden;
   vorzugsweise der Unterdruck von 10 bis 500 mbar, vorzugsweise 10 bis 250 mbar, vorzugsweise 10 bis 90 mbar, weiter bevorzugt 50 bis 70 mbar, beträgt;
   vorzugsweise das Einbringen des Kieselsols und ggf. der Ammoniumpolyacrylsäure und/oder der Alkalipolyacrylsäure und/oder Erdalkalipolyacrylsäure und/oder der Polyacrylsäure und/oder der anorganischen Partikel und/oder der photokatalytisch-aktiven Partikel durch ein mechanisches Hochfrequenzgerät erfolgt;
   vorzugsweise das Einbringen des Kieselsols und ggf. der Ammoniumpolyacrylsäure und/oder der Alkalipolyacrylsäure und/oder Erdalkalipolyacrylsäure und/oder der Polyacrylsäure und/oder der anorganischen Partikel und/oder der photokatalytisch-aktiven Partikel unter Verwendung von Ultraschall erfolgt;
   vorzugsweise der keramische Formkörper eine Grobkeramik ist, die vorzugsweise aus der Gruppe, die aus Dachziegel, Ziegel, Klinker und Fassadenelement besteht, ausgewählt wird;
   vorzugsweise die anorganischen Partikel ein Oxidgemisch sind.
   vorzugsweise die verwendeten anorganischen Partikel überwiegend, vorzugsweise zu wenigstens 80 Gew.-%, weiter bevorzugt zu wenigstens 95 Gew.-%, jeweils bezogen auf die Gesamtmenge der verwendeten anorganischen Partikel, eine geschlossene Oberfläche aufweisen;
   vorzugsweise die verwendeten anorganischen Partikel im wesentlichen nicht porös, vorzugsweise nicht porös, sind;
   vorzugsweise die verwendeten anorganischen Partikel zur Erzeugung der nichtnewtonschen kolloidalen Eigenschaften wenigstens einen positiven Gerüstbildner umfassen;
   vorzugsweise die verwendeten anorganischen Partikel zur Erzeugung der nichtnewtonschen kolloidalen Eigenschaften wenigstens einen negativen Gerüstbildner umfassen;
   vorzugsweise die verwendeten anorganischen Partikel SiO₂ und/oder Al₂O₃ umfassen;
   vorzugsweise das Oxidgemisch SiO₂ und Al₂O₃ umfaßt;
   vorzugsweise das SiO₂ eine pyrogene Kieselsäure ist;
   vorzugsweise die photokatalytisch-aktiven Partikel überwiegend, vorzugsweise zu wenigstens 80 Gew.-%, weiter bevorzugt zu wenigstens 95 Gew.-%, jeweils bezogen auf die Gesamtmenge der verwendeten photokatalytisch-aktiven Partikel, eine geschlossene Oberfläche aufweisen;
   vorzugsweise die photokatalytischen Teilchen eine Teilchengröße von 5 bis 45 nm, vorzugsweise von 20 bis 30 nm aufweisen;
   vorzugsweise die photokatalytisch-aktiven Partikel außerdem ggf. Zinksilikatverbindungen und/oder Zinktitanatverbindungen umfassen;
   vorzugsweise das TiO₂ und/oder das ZnO pyrogen ist;
   vorzugsweise die Zinksilikatverbindung Zn₂SiO₄ ist;
   vorzugsweise die Zinktitanatverbindung Zn₂TiO₄ ist;
   vorzugsweise das TiO₂ zu wenigstens 70 Gew.-%, weiter bevorzugt zu wenigstens 80 Gew.-%, jeweils bezogen auf die Gesamtmenge an TiO₂, in der Anatas-Modifikation vorliegt;
   vorzugsweise das TiO₂ zu etwa 80 Gew.-% in der Anatas-Modifikation und zu etwa 20 Gew.-% in der Rutil-Modifikation, jeweils bezogen auf die Gesamtmenge an TiO₂, vorliegt;
   vorzugsweise das ZnO zu etwa 70 % in der kubischen Modifikation, vorzugsweise zu 100 % in der kubischen Modifikation vorliegt;
   vorzugsweise die poröse photokatalytische aktive Beschichtung TiO₂ und ZnO in einem Verhältnis von 1:5 bis 5:1, vorzugsweise in einem Verhältnis von 2,5:1 bis 1,0:1, besonders bevorzugt in einem Verhältnis 2,0:1 enthält;
   vorzugsweise die durchschnittliche Partikelgröße der auf den keramischen Formkörper aufgebrachten Dispersion enthaltenen Partikel kleiner als 3 µm, vorzugsweise kleiner als 1 µm ist;
   vorzugsweise die Flüssigphase wasserhaltig ist oder Wasser ist;
   vorzugsweise die Dispersion im Schritt (c) oder (g) durch Sprühen auf den keramischen Formkörper aufgebracht wird;
   vorzugsweise die anorganischen Partikel farbgebende Partikel umfassen;
   vorzugsweise der keramische Formkörper engobiert wird;
   vorzugsweise der keramische Formkörper vor dem Auftragen der photokatalytisch-aktiven Beschichtung und/oder nach dem Trocknen der aufgebrachten photokatalytisch-aktiven Beschichtung engobiert wird;
   vorzugsweise der beschichtete keramische Formkörper nach dem Trocknen der photokatalytisch-aktiven Beschichtung thermisch gehärtet wird;
   vorzugsweise bei einer Temperatur > 250 °C, vorzugsweise von bis zu 1100 °C, gehärtet wird;
   vorzugsweise bei einer Temperatur > 250 °C, vorzugsweise von bis zu 550 °C, gehärtet wird;
   vorzugsweise der beschichtete keramische Formkörper hydrophobiert wird.
   Keramischer Formkörper mit photokatalytisch-aktiver Beschichtung gemäß einem der Ansprüche 3 bis 11, wobei vorzugsweise die photokatalytisch-aktive Beschichtung eine hohe Haftfestigkeit aufweist;
   vorzugsweise die photokatalytisch-aktive Beschichtung eine gleichmäßige Beschichtung ist, die photokatalytisch-aktive Partikel enthält, wobei die photokatalytisch-aktiven Partikel in der Beschichtung im Wesentlichen nicht agglomeriert und gleichmäßig verteilt vorliegen;
   4vorzugsweise der keramische Formkörper nach dem Verfahren gemäß einem der Ansprüche 1 bis 2 hergestellt ist;
   vorzugsweise die photokatalytisch-aktive Beschichtung ein Stabilisierungsmittel und/oder Bindemittel und/ oder einen Haftvermittler enthält;
   vorzugsweise das Stabilisierungsmittel und/oder das Bindemittel und/ oder der Haftvermittler Kieselsol und/oder Ammoniumpolyacrylsäure und/oder Alkalipolyacrylsäure und/oder Erdalkalipolyacrylsäure und/oder Polyacrylsäure ist oder umfaßt;
   vorzugsweise die Beschichtung außerdem Zinksilikatverbindungen und/oder Zinktitanatverbindungen umfasst;
   vorzugsweise das TiO₂ und/oder das ZnO pyrogen ist;
   vorzugsweise die Zinksilikatverbindung Zn₂SiO₄ ist;
   vorzugsweise die Zinktitanatverbindung Zn₂TiO₄ ist;
   vorzugsweise die photokatalytische Beschichtung eine spezifische Oberfläche in einem Bereich von 25 m²/g bis 150 m²/g, aufweist;
   dass die poröse photokatalytische aktive Beschichtung TiO₂ und ZnO in einem Verhältnis von 1:5 bis 5:1, vorzugsweise in einem Verhältnis 2,5:1 bis 1,0:1, besonders bevorzugt 2,0:1 enthält;
   vorzugsweise der keramische Formkörper eine Engobe aufweist;
   vorzugsweise die Engobe zwischen dem keramischen Formkörper und der photokatalytisch-aktiven Beschichtung und/oder auf der dem keramischen Formkörper abgewandten Seite der photokatalytisch-aktiven Beschichtung angeordnet ist;
   vorzugsweise die photokatalytisch-aktive Beschichtung eine Engobe ist;
   vorzugsweise in der Engobe farbgebende Mittel, vorzugsweise anorganische Farbpigmente, enthalten sind;
   vorzugsweise der keramische Formkörper ein grobkeramischer Formkörper, vorzugsweise ein Dachziegel, ein Ziegel, ein Klinker oder Fassadenelement, ist;
   vorzugsweise dass photokatalytische Beschichtung ferner anorganische Partikel umfasst;
   vorzugsweise die anorganischen Partikel ein Oxidgemisch sind;
   vorzugsweise die verwendeten anorganischen Partikel überwiegend, vorzugsweise zu wenigstens 80 Gew.-%, weiter bevorzugt zu wenigstens 95 Gew.-%, jeweils bezogen auf die Gesamtmenge der verwendeten anorganischen Partikel, eine geschlossene Oberfläche aufweisen;
   vorzugsweise die verwendeten anorganischen Partikel im wesentlichen nicht porös, vorzugsweise nicht porös, sind;
   vorzugsweise die verwendeten anorganischen Partikel wenigstens einen positiven Gerüstbildner umfassen;
   vorzugsweise die verwendeten anorganischen Partikel wenigstens einen negativen Gerüstbildner umfassen;
   vorzugsweise die verwendeten anorganischen Partikel SiO₂ und/oder Al₂O₃ umfassen;
   vorzugsweise das Oxidgemisch SiO₂ und Al₂O₃ umfaßt;
   vorzugsweise das SiO₂ eine pyrogene Kieselsäure ist;
   vorzugsweise die photokatalytisch-aktiven Partikel überwiegend, vorzugsweise zu wenigstens 80 Gew.-%, weiter bevorzugt zu wenigstens 95 Gew.-%, jeweils bezogen auf die Gesamtmenge der verwendeten photokatalytisch-aktiven Partikel, eine geschlossene Oberfläche aufweisen;
   vorzugsweise die photokatalytischen Teilchen eine Teilchengröße von 5 bis 45 nm, vorzugsweise von 20 bis 30 nm aufweisen;
   vorzugsweise das TiO₂ zu wenigstens 70 Gew.-%, weiter bevorzugt zu wenigstens 80 Gew.-%, jeweils bezogen auf die Gesamtmenge an TiO₂. in der Anatas-Modifikation vorliegt;
   dass das TiO₂ zu etwa 80 Gew.-% in der Anatas-Modifikation und zu etwa 20 Gew.-% in der Rutil-Modifikation, jeweils bezogen auf die Gesamtmenge an TiO₂, vorliegt;
   vorzugsweise das ZnO zu wenigstens 70 Gew.-% vorzugsweise zu 100 Gew.-%, jeweils bezogen auf die Gesamtmenge an ZnO, in der kubischen Modifikation vorliegt;
   vorzugsweise die durchschnittliche Partikelgröße der auf den keramischen Formkörper aufgebrachten Dispersion enthaltenen Partikel kleiner als 3 µm, vorzugsweise kleiner als 1 µm ist;
   vorzugsweise der beschichtete keramische Formkörper hydrophobiert ist.
   Verwendung von ZnO und/oder TiO₂ und ggf. Zinksilikat und/oder Zinktitanat in photokatalytischen Beschichtungen von keramischen Formkörpern, insbesondere Dachziegeln, als biostatischer Wirkstoff.

## Patentansprüche

1. Verfahren zur Herstellung eines keramischen Formkörpers mit photokatalytischaktiver Beschichtung,
**dadurch gekennzeichnet,**
**dass** es entweder die folgenden Schritte umfaßt:
(a) Einbringen von Kieselsol in eine Flüssigphase,
(b) Einbringen von photokatalytisch-aktiven Partikeln in die gemäß Schritt (a) bereitgestellte Phase,
(c) Aufbringen der in Schritt (b) bereitgestellten Dispersion auf einen keramischen Formkörper unter Bereitstellung eines beschichteten Formkörpers,
(d)Trocknen und/oder Härten des in Schritt (c) beschichteten Formkörpers,
oder die folgenden Schritte umfaßt:
(e) Einbringen von photokatalytisch-akfiven Partikeln in eine Flüssigphase,
(f) Einbringen von Kieselsol in die gemäß Schritt (e) bereitgestellte Phase,
(g) Aufbringen der in Schritt (f) bereitgestellten Dispersion auf einen keramischen Formkörper unter Bereitstellung eines beschichteten Formkörper,
(i) Trocknen und/oder Härten des in Schritt (g) beschichteten Formkörpers, wobei die photokatalytisch-aktiven Partikel TiO₂-Partikel und ZnO-Partikel umfassen, wobei
in Schritt (a) vor oder nach dem Einbringen des Kieselsols anorganische Partikel in die Flüssigphase unter Bereitstellung einer nichtnewtonschen kolloidalen Dispersion eingebracht werden oder
**dass** in Schritt (e) vor dem Einbringen der photokatalytisch-aktiven Partikel anorganische Partikel in die Flüssigphase unter Bereitstellung einer nichtnewtonschen kolloidalen Dispersion eingebracht werden, wobei
die nicht-newtonsche kolloidale Dispersion eine SiO₂/Al₂O₃-Gerüststruktur enthält, welche ein Oxidgemisch aus 80 bis 90 Gew.-% SiO₂ und 10 bis 20 Gew.-% Al₂O₃, bezogen auf das Gesamtgewicht des Oxidgemisches, umfasst.

2. Verfahren nach Anspruch 1, **dadurch gekennzeichnet,**
**dass** die poröse photokatalytische aktive Beschichtung TiO₂ und ZnO in einem Verhältnis von 1:5 bis 5:1, vorzugsweise in einem Verhältnis von 2,5:1 bis 1,0:1, besonders bevorzugt in einem Verhältnis 2,0:1 enthält.

3. Keramischer Formkörper mit einer photokatalytischen Beschichtung
**dadurch gekennzeichnet,**
**dass** die photokatatytische Beschichtung ZnO und TiO₂ und ggf. Zinksilikat und/oder. Zinktitanat umfasst, wobei
die photoRatalytische Beschichtung eine spezifische Oberfläche in einem Bereich von 20 m²/g bis 200 m²/g aufweist, und das TiO₂ und ZnO durch Flammenhydrolyse als hochdisperses TiO₂ und ZnO erzeugt sind, wobei die photokatalytische Beschichtung als Stabilisierungsmittel und/oder Bindemittel und/oder Haftvermittler Kieselsol umfasst, wobei das TiO₂ und das ZnO und ggf. die Zinksilikatverbindungen und/oder die Zinktitanatverbindungen in einer SiO₂/Al₂O₃-Gerüststruktur aufgenommen sind, wobei die Gerüststruktur ein Oxidgemisch aus 80 bis 90 Gew.-% SiO₂ und 10 bis 20 Gew.-% Al₂O₃, bezogen auf das Gesamtgewicht des Oxidgemisches, umfasst.

4. Keramischer Formkörper mit einer photokatalytischen Beschichtung nach Anspruch 3,
**dadurch gekennzeichnet,**
**dass** dass photokatalytische Beschichtung ferner anorganische Partikel eines Oxidgemisches umfasst, wobei die verwendeten anorganischen Partikel zu wenigstens 80 Ges.-%, jeweils bezogen auf die Gesamtmenge der verwendeten anorganischen Partikel, eine geschlossene Oberfläche aufweisen.

5. Keramischer Formkörper mit einer photokatalytischen Beschichtung nach
Ansprüche 4
**dadurch gekennzeichnet,**
**dass** das SiO₂ eine pyrogene Kieselsäure ist

6. Keramischer Formkörper mit einer photokatalytischen Beschichtung nach einem der Ansprüche 3 bis 5
**dadurch gekennzeichnet,**
**dass** die photokatalytisch-aktiven Partikel zu wenigstens 80 Gew.-%, jeweils bezogen auf die Gesamtmenge der verwendeten photokatalytisch-aktiven Partikel, eine geschlossene Oberfläche aufweisen.

7. Keramischer Formkörper mit einer photokatalytischen Beschichtung nach einem der Ansprüche 3 bis 6
**dadurch gekennzeichnet,**
das die photokatalytischen Teilchen eine Teilchengröße von 5 bis 45 nm, vorzugsweise von 20 bis 30 nm aufweisen.

8. Keramischer Formkörper mit einer photokatalytischen Beschichtung nach einem der Ansprüche 3 bis 7
**dadurch gekennzeichnet,**
**dass** das TiO₂ und/oder das ZnO pyrogen hergestellt ist.

9. Keramischer Formkörper mit einer photokatalytischen Beschichtung nach einem der Ansprüche 3 bis 8,
**dadurch gekennzeichnet,**
**dass** das TiO₂ zu wenigstens 70 Ges.-% jeweils bezogen auf die Gesamtmenge an TiO₂, in der Anatas-Modifikation vorliegt.

10. Keramischer Formkörper mit einer photokatalytischen Beschichtung nach einem der Ansprüche 3 bis 9
**dadurch gekennzeichnet,**
**dass** das ZnO zu wenigstens 70 Gew.-% jeweils bezogen auf die Gesamtmenge an ZnO, in der kubischen Modifikation vorliegt.

11. Keramischer Formkörper mit einer photokatalytischen Beschichtung nach einem der Ansprüche 3 bis 10
**dadurch gekennzeichnet,**
**dass** die poröse photokätalytische aktive Beschichtung TiO₂ und ZnO in einem Verhältnis von 1:5 bis 5:1, vorzugsweise in einem-Verhältnis von 2,5:1 bis 1,0:1, besonders bevorzugt in einem Verhältnis 2,0:1 enthält.

12. Verwendung der in den Ansprüchen 3-11 definierten photokatalytischen Beschichtungen von keramischen Formkörpern, insbesondere und Dachziegeln, als biostatischer Wirkstoff.

## Claims

1. Process for producing a shaped ceramic body having a photocatalytically active coating, **characterized in that** it either comprises the following steps:
(a) introduction of silica sol into a liquid phase,
(b) introduction of photocatalytically active particles into the phase produced according to step (a),
(c) application of the dispersion produced in step (b) to a shaped ceramic body to produce a coated shaped body,
(d) drying and/or curing of the shaped body coated in step (c),
or comprises the following steps:
(e) introduction of photocatalytically active particles into a liquid phase,
(f) introduction of silica sol into the phase produced according to step (e),
(g) application of the dispersion produced in step (f) to a shaped ceramic body to produce a coated shaped body,
(i) drying and/or curing of the shaped body coated in step (g), where the photocatalytically active particles comprise TiO₂ particles and ZnO particles and where inorganic particles are introduced into the liquid phase in step (a) before or after the introduction of the silica sol to produce a nonnewtonian colloidal dispersion or
inorganic particles are introduced into the liquid phase in the step (e) before introduction of the photocatalytically active particles to produce a nonnewtonian colloidal dispersion, where
the nonnewtonian colloidal dispersion contains an SiO₂/Al₂O₃ framework structure which comprises an oxide mixture of from 80 to 90% by weight of SiO₂ and from 10 to 20% by weight of Al₂O₃, based on the total weight of the oxide mixture.

2. Process according to Claim 1, **characterized in that** the porous photocatalytically active coating contains TiO₂ and ZnO in a ratio of from 1:5 to 5:1, preferably in a ratio of from 2.5:1 to 1.0:1, particularly preferably in a ratio of 2.0:1.

3. Shaped ceramic body having a photocatalytic coating, **characterized in that** the photocatalytic coating comprises ZnO and TiO₂ and, if appropriate, zinc silicate and/or zinc titanate, where
the photocatalytic coating has a specific surface area in the range from 20 m²/g to 200 m²/g and the TiO₂ and ZnO are produced as finely divided TiO₂ and ZnO by flame hydrolysis and where
the photocatalytic coating comprises silica sol as stabilizer and/or binder and/or bonding agent, where the TiO₂ and the ZnO and, if appropriate, the zinc silicate compounds and/or the zinc titanate compounds are incorporated in an SiO₂/Al₂O₃ framework structure and the framework structure comprises an oxide mixture of from 80 to 90% by weight of SiO₂ and from 10 to 20% by weight of Al₂O₃, based on the total weight of the oxide mixture.

4. Shaped ceramic body having a photocatalytic coating according to Claim 3, **characterized in that** the photocatalytic coating further comprises inorganic particles of an oxide mixture, where the inorganic particles used have a closed surface to an extent of at least 80% by weight, in each case based on the total amount of the inorganic particles used.

5. Shaped ceramic body having a photocatalytic coating according to Claim 4, **characterized in that** the SiO₂ is a pyrogenic silica.

6. Shaped ceramic body having a photocatalytic coating according to any of Claims 3 to 5, **characterized in that** the photocatalytically active particles have a closed surface to an extent of at least 80% by weight, in each case based on the total amount of the photocatalytically active particles used.

7. Shaped ceramic body having a photocatalytic coating according to any of Claims 3 to 6, **characterized in that** the photocatalytic particles have a particle size of from 5 to 45 nm, preferably from 20 to 30 nm.

8. Shaped ceramic body having a photocatalytic coating according to any of Claims 3 to 7, **characterized in that** the TiO₂ and/or the ZnO are/is pyrogenic.

9. Shaped ceramic body having a photocatalytic coating according to any of Claims 3 to 8, **characterized in that** the TiO₂ is present to an extent of at least 70% by weight, in each case based on the total amount of TiO₂, in the anatase modification.

10. Shaped ceramic body having a photocatalytic coating according to any of Claims 3 to 9, **characterized in that** the ZnO is present to an extent of at least 70% by weight, in each case based on the total amount of ZnO, in the cubic modification.

11. Shaped ceramic body having a photocatalytic coating according to any of Claims 3 to 10, **characterized in that** the porous photocatalytically active coating contains TiO₂ and ZnO in a ratio of from 1:5 to 5:1, preferably in a ratio of from 2.5:1 to 1.0:1, particularly preferably in a ratio of 2.0:1.

12. Use of the photocatalytic coatings of shaped ceramic bodies defined in any of Claims 3-11, in particular on roofing tiles, as biostatic material.

## Revendications

1. Procédé de fabrication d'une pièce moulée céramique à revêtement photocatalytique, **caractérisé en ce que**
soit il contient les étapes suivantes :
(a) introduction d'un sol silicique dans une phase liquide,
(b) introduction de particules photocatalytiquement actives dans la phase préparée selon l'étape (a),
(c) application de la dispersion préparée à l'étape (b) sur une pièce moulée céramique, donnant une pièce céramique moulée revêtue,
(d) séchage et/ou durcissement de la pièce céramique moulée revêtue à l'étape (c),
soit il contient les étapes suivantes :
(e) introduction de particules photocatalytiquement actives dans une phase liquide,
(f) introduction d'un sol silicique dans la phase préparée selon l'étape (e),
(g) application de la dispersion préparée à l'étape (f) sur une pièce céramique moulée, donnant une pièce céramique moulée revêtue,
(i) séchage et/ou durcissement de la pièce céramique moulée revêtue à l'étape (g), sachant que les particules photocatalytiquement actives comprennent des particules de TiO₂ et/ou des particules de ZnO, sachant que dans l'étape (a), avant ou après l'introduction du sol silicique, des particules inorganiques sont introduites dans la phase liquide, ceci mettant à disposition une dispersion colloïdale non newtonienne, ou que
dans l'étape (e), avant l'introduction des particules photocatalytiquement actives, des particules inorganiques sont introduites dans la phase liquide, ceci mettant à disposition une dispersion colloïdale non newtonienne, sachant que
la dispersion colloïdale non newtonienne contient une structure charpente en SiO₂/Al₂O₃, laquelle comprend un mélange d'oxydes à 80 à 90 % en poids de SiO₂ et à 10 à 20% en poids de Al₂O₃, rapportés au poids total du mélange d'oxydes.

2. Procédé selon la revendication 1,
**caractérisé en ce que**
la couche poreuse photocatalytiquement active contient du TiO₂ et du ZnO dans un rapport de 1 : 5 à 5 : 1, de préférence dans un rapport de 2,5 : 1 à 1,0 : 1, de façon particulièrement préférée dans un rapport de 2,0 : 1.

3. Pièce moulée céramique avec un revêtement photocatalytique,
**caractérisée en ce que**
le revêtement photocatalytique comprend du ZnO et du TiO₂ et, le cas échéant, du silicate de zinc et/ou du titanate de zinc, sachant que
le revêtement photocatalytique présente une surface spécifique dans un intervalle de 20 m²/g à 200 m²/g, et que le TiO₂ et le ZnO sont produits par hydrolyse dans la flamme comme TiO₂ et ZnO hautement dispersés, sachant que
le revêtement photocatalytique comprend comme moyen de stabilisation et/ou comme liant et/ou comme agent de pontage du sol de silice, sachant que le TiO₂ et le ZnO et, le cas échéant, les composés de silicate de zinc et/ou les composés de titanate de zinc sont incorporés dans une structure charpente de SiO₂/Al₂O₃, la structure charpente comprenant un mélange d'oxydes à 80 à 90% en poids de SiO₂ et à 10 à 20 % en poids d'Al₂O₃, rapportés au poids total du mélange d'oxydes.

4. Pièce moulée céramique avec un revêtement photocatalytique selon la revendication 3, **caractérisée en ce que**
le revêtement photocatalytique comprend en outre des particules inorganiques d'un mélange d'oxydes, sachant que les particules inorganiques utilisées présentent à au moins 80% en poids, rapportés respectivement à la quantité totale des particules inorganiques utilisées, une surface fermée.

5. Pièce moulée céramique avec un revêtement photocatalytique selon la revendication 4, **caractérisée en ce que**
le SiO₂ est un acide silicique pyrogénique.

6. Pièce moulée céramique avec un revêtement photocatalytique selon l'une quelconque des revendications 3 à 5,
**caractérisée en ce que**
les particules photocatalytiquement actives présentent à au moins 80% en poids, rapportés à la quantité totale des particules photocatalytiquement actives, une surface fermée.

7. Pièce moulée céramique avec un revêtement photocatalytique selon l'une quelconque des revendications 3 à 6,
**caractérisée en ce que**
les particules photocatalytiques présentent une taille de particule de 5 à 45 nm, de préférence de 20 à 30 nm.

8. Pièce moulée céramique avec un revêtement photocatalytique selon l'une quelconque des revendications 3 à 7,
**caractérisée en ce que**
le TiO₂ et/ou le ZnO sont préparés pyrogéniquement.

9. Pièce moulée céramique avec un revêtement photocatalytique selon l'une quelconque des revendications 3 à 8,
**caractérisée en ce que**
le TiO₂ est présent pour au moins 70% en poids, rapportés respectivement à la quantité totale de TiO₂, dans la modification anatase.

10. Pièce moulée céramique avec un revêtement photocatalytique selon l'une quelconque des revendications 3 à 9,
**caractérisée en ce que**
le ZnO est présent pour au moins 70% en poids, rapportés respectivement à la quantité totale de ZnO, dans la modification cubique.

11. Pièce moulée céramique avec un revêtement photocatalytique selon l'une quelconque des revendications 3 à 10,
**caractérisée en ce que**
le revêtement poreux photocatalytiquement actif contient du TiO₂ et du ZnO dans un rapport de 1 : 5 à 5 : 1, de préférence dans un rapport de 2,5 : 1 à 1,0 : 1, de façon particulièrement préférée dans un rapport de 2,0 : 1.

12. Utilisation des revêtements photocatalytiques de pièces moulées céramiques définis dans les revendications 3 à 11, en particulier sur des tuiles de toiture, comme agent actif biostatique.
